# EUROPEAN PATENT APPLICATION

(11) **EP 0 936 803 A2**
(43) Date of publication of application: **18.08.1999**
(21) Application number: 99300918.2
(22) Date of filing: 09.02.1999
(51) Int. Cl.: H04N 1/40

(54) **Original image reading apparatus and correction method of original image information**

(30) Priority: 13.02.1998 JP 3180098
(71) Applicant: KONICA CORPORATION, Tokyo (JP)
(72) Inventor: Toura, Kosuke, c/o Konica Corporation, Hachioji-shi, Tokyo (JP)
(74) Representative: Rees, Alexander Ellison

(57) **Abstract**

An original image reading apparatus includes: a plurality of image reading device for reading an original; a memory for storing a correction parameter; a correction parameter generator for generating the correction parameter, wherein the correction parameter generated by the correction parameter generator is stored in the memory or replaced with a preset correction parameter which has been stored in the memory; and a correcting device for correcting image information of the original read by a specific image reading device selected from the plurality of image reading devices according to the correction parameter stored in the memory.

## Description

### BACKGROUND OF THE INVENTION

The present invention relates to an original image reading apparatus and a correction method of original image information, which are preferably applied to an image forming apparatus having a platen type original reading mechanism and an automatic document feeding type image reading mechanism.

In more details, in the present invention, in the case where more than 2 image reading means are provided so that an arbitrary original reading means can be selected, when a specific image reading means is selected from the above image reading means, and an arbitrary image whose original density is unknown, is read, the original reading information by the arbitrary image is corrected according to a correction parameter previously prepared for the selected image reading means, and even when any image reading means is selected, an original image (information) having the uniform density can be obtained.

Recently, in many cases, an original image reading apparatus is used which is provided with a platen type reading mechanism to read an original image by causing the image sensing optical system to scan an original which is placed on the document platen glass, and in addition to that, an automatic document feeder (Auto Document Feeder) mechanism to read an original image by conveying (scanning) the original placed on the document platen glass under the condition that an image sensing optical system is stopped.

In such the original image reading apparatus provided with these two types of reading mechanisms, the following is well known: a difference occurs between the original reading characteristics (density/modulation transfer function (MTF: Modulation Transfer Function), etc.) of these two optical paths, due to the difference of light transmissivity between these two document platen glasses, or the difference of the height of original sheets at the reading (the difference between these two optical path distances).

In the conventional type original image reading apparatus, this difference is neglected, or the original image information is corrected by averaged (fixed) correction parameters. Accordingly, a correction error occurs for each reading mechanism, sometimes resulting in disadvantages in the image quality (fogging, missing, blurring).

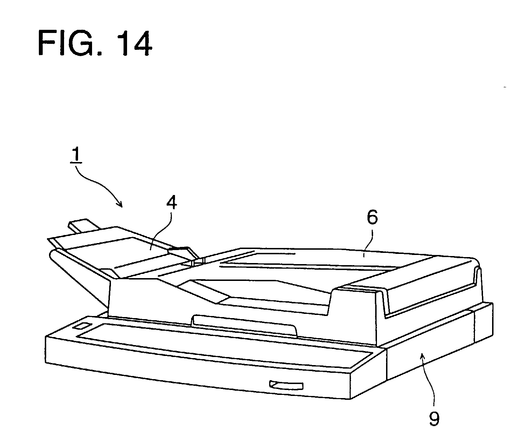

Fig. 14 is a perspective view showing a structural example of an original image reading apparatus 1 provided with this type of automatic document feeding mechanism (hereinafter, referred to as ADF reading mechanism).

The original image reading apparatus 1 shown in Fig. 14 is attached to the upper portion of a digital copier, or similar apparatus, and a platen cover 6 is attached onto a cabinet (main apparatus) 9. An original inlet 4, constituting the ADF reading mechanism, is provided on the left end portion of the platen cover 6, and when a thin original sheet is inserted into the inlet, the original image is read while being conveyed into the inside of the apparatus. An extremely thick original or book can not be conveyed physically by the ADF reading mechanism. Accordingly, the same copy function as the conventional one is also used for the ADF reading mechanisms. For example, the platen cover 6 is opened upward, and the original image is read while the original is placed on the platen.

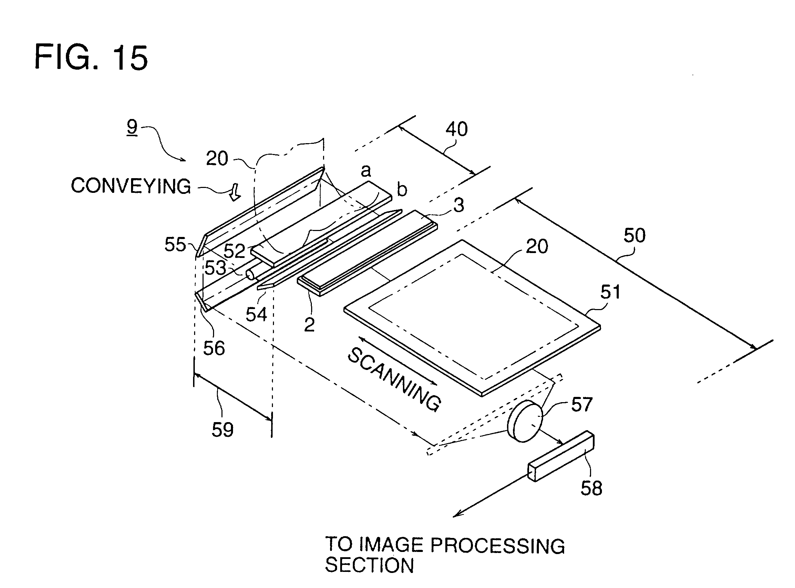

An image sensing optical system in the inside of this type of original image reading apparatus 1 is shown in a structural example in Fig. 15. In this image sensing optical system, a document platen glass 51 constituting a platen reading mechanism 50 is provided inside the cabinet 9, and an optical system 59 constituting the image sensing system scans an original 20 placed on the document platen glass 51. A lamp 53 is provided in the optical system 59, and the original 20 is irradiated by the light.

The returning light including the original image information from the original 20 is deflected in the scanning direction through mirrors 54, 55 and 56. An image forming optical system 57 is attached to the right end portion in the cabinet 1, and the light from the mirror 56 is image-formed on the system. A CCD image sensor 58 is attached on the light emergence side of the image focusing optical system 57, and receives the light from the image focusing optical system 57 and the original image is image sensed. After the original image signal by the CCD pick-up element 58 is analog/digital converted, it is outputted to an image processing section as the original image information Di.

Document platen glass 52 for ADF is provided in the ADF reading mechanism 40, and the optical system 59 stands-still under the document platen glass 52. By conveying (scanning) the original 20 from a point "a" of the document platen glass 52 in Fig. 15 to a point "b", raster scanning is conducted. The document platen glass 52 is provided so that the height for reading the original 20 with respect to the optical system 59 is constant, and further, dusts and dirt do not enter the lamp 53 and the mirror section 54, 55, and 56.

Then, when the light is irradiated on the original 20 from the lamp 53 of the optical system 59, in the same manner as in the platen type one, the original image information Di by the CCD image sensor 58 is outputted to an image processing section.

In this ADF reading mechanism 40, the original 20 is conveyed while being in contact with the document platen glass 52, so that the height (position) for reading the original 20 is constant. In this case, the document platen glass 52 is triboelectrically charged by conveyance of the original 20, thereby, dusts and dirt are easily adhered onto the document platen glass 52. When dusts and dirt are adhered onto the document platen glass 52, unnecessary stripes or shadows are read, resulting in an unpreferable reproduction image.

Accordingly, in order to make dusts and dirt hardly adhere to the document platen glass 52, in many cases, electrically conductive coating (chemical coating to lower the friction of the surface of the glass) is conducted on the document platen glass 52. When the conductive coating is conducted, normally the light transmissivity is lowered by approximately 10 - 20 %, although it depends on coating materials. When the light transmissivity is lowered, a quantity of light is lowered at the time of original image reading, thereby, the reading density is higher.

In that point, in the platen type reading mechanism 50, because the original 50 is placed stationarily on the document platen glass 51, triboelectricity scarcely occurs on the document platen glass. Accordingly, the light transmissivity is not lowered, thereby, the conductive coating, which increases cost, is not necessary.

However, in the conventional type original image reading apparatus 1 provided with the ADF reading mechanism 40 and the platen reading mechanism 50, there are following problems.
(1) When the originals 20 having the same reflectance (the same density) are read, the quantity of light inputted into the CCD image sensor 58 is different from each other, due to the difference between the light transmissivity of the document platen glass 51 and that of the document platen glass 52, at the time of ADF reading and at the time of platen reading. Accordingly, a reading error (density difference, or difference of the MTF) occurs between the ADF reading mechanism 40 and the platen type reading mechanism 50.
(2) Further, in order to conduct so-called "zero" adjustment of the optical system 59, the glass 2 for correction having a reference density plate 3 as shown in Fig. 15 is provided between the ADF reading mechanism 40 and the platen reading mechanism 50. However, in order to conduct the density correction corresponding to the difference of the light transmissivity between the document platen glass 51 and 52, it is necessary to provide a plurality of kinds of glass 2 for correction corresponding to the existence or not, of coating, thereby, resulting in an increase of a size of the original image reading apparatus 1, or an increase of cost. Accordingly, in many cases, normally, either of the glass 2 for correction having coating, or the glass 2 for correction having no-coating (normally, no-coating whose cost is low) is selected, and the correction mechanism is common to each other.
(3) Further, the optical system 5 of the ADF reading mechanism 40 is common to that of the platen reading mechanism 50, however, the glass 2 for correction, document platen glass 51 and 52 are not common to each other. Accordingly, a slight difference occurs between the thickness or mounting positions of these glass 2, 51, and 52, and the difference causes some variations in a light receiving amount of the CCD image sensor 58, resulting in occurrence of the difference of reading density of the original image.
(4) Normally, in many cases, such a problem as item (3) is neglected as an unadjustable one, or roughly corrected by using an averaged error correction value. However, in the conductive coating on the document platen glass 52, a fluctuation in the light transmissivity is large depending on the production lot or the like, and the density difference occurs at the time of reading of the original in each original reading apparatus. Further, the refractive index of the optical path changes depending on the conductive coating, and sometimes, the difference of the MTF, which is an object of evaluation of the resolution, occurs. Thereby, it results in a cause by which problems (fogging, missing, etc.) in the image quality of the copied image occur.

### SUMMARY OF THE INVENTION

Accordingly, the present invention solves the above described problems. An object of the present invention is to provide an original image reading apparatus and a correction method of the original image information, in which, in the case where more than 2 image reading apparatus are provided so that an arbitrary original reading means can be selected, even when any image reading means is selected, an original image (information) having the uniform density can be obtained.

In order to solve the above-described problems, the original image reading apparatus according to the present invention includes: a plurality of image reading means for reading an original; a memory for storing a correction parameter; correction parameter generating means for generating the correction parameter, wherein the correction parameter generated by the correction parameter generating means is stored in the memory or replaced with a preset correction parameter which is previously stored in the memory; and correcting means for correcting image information of the original read by a specific image reading means selected from the plurality of image reading means according to the correction parameter stored in the memory.

According to the original image reading apparatus of the present invention, when a specific image reading apparatus is selected from more than 2 image reading apparatus, and an arbitrary image having unknown original density is read, the original reading information of the arbitrary image can be corrected according to the correction parameter which is previously generated for the selected image reading means.

Accordingly, when the original having the same density is read by all of more than two image reading means, even when a reading error occurs among more than two image reading means due to the difference of the transmissivity in optical characteristics, the original image information having the uniform density can be obtained from any of all image reading means.

Accordingly, the present invention can be satisfactorily applied to the original reading apparatus provided with the platen type original reading mechanism whose image sensing system scans an arbitrary original having unknown density, or the automatic document feeding mechanism in which the original is conveyed for being scanned by the image sensing system.

### BRIEF DESCRIPTION OF THE DRAWINGS

Fig. 1 is a block diagram showing a structural example of an original image reading apparatus 100 as an example.

Fig. 2 is a conceptual view showing a structural example of an image sensing optical system of the original image reading apparatus 100.

Fig. 3 is a block diagram showing a structural example of an image processing section 15 of the original image reading apparatus 100.

Fig. 4 is a block diagram showing a structural example of an image output section 19 and a recording image processing section 29 of the original image reading apparatus 100.

Fig. 5 is a characteristic view showing an example of relationships of the reading density of an original 20' before correction to the reference density, in a platen type reading mechanism S1 and an ADF reading mechanism S2.

Fig. 6 is a conceptual view (No. 1) showing an example in which a correction parameter for density correction is obtained.

Fig. 7 is a conceptual view (No. 2) showing an example in which a correction parameter for density correction is obtained.

Fig. 8 is a conceptual view (No. 3) showing an example in which a correction parameter for density correction is obtained.

Fig. 9 is a conceptual view (No. 4) showing an example in which a correction parameter for density correction is obtained.

Fig. 10 is a characteristic view showing an example of relationships of the reading density of an original 20' after correction to the reference density, in the platen type reading mechanism S1 and the ADF reading mechanism S2.

Fig. 11 is a conceptual view showing an example in which a correction parameter for MTF correction is obtained.

Fig. 12 is a block diagram showing a structural example of a digital copier 200 to which the original image reading apparatus 100 is applied.

Fig. 13 is a sectional view showing an example of the structure of the digital copier 200.

Fig. 14 is a perspective view showing an example of the structure of a conventional type original image reading apparatus 1.

Fig. 15 is a perspective view showing an example of the structure of an image sensing optical system of the original image reading apparatus 1.

### DETAILED DESCRIPTION OF THE PREFERRED EMBODIMENT

Referring to the drawings, an original image reading apparatus and a correction method of an original image information as an example of the present invention will be described below.

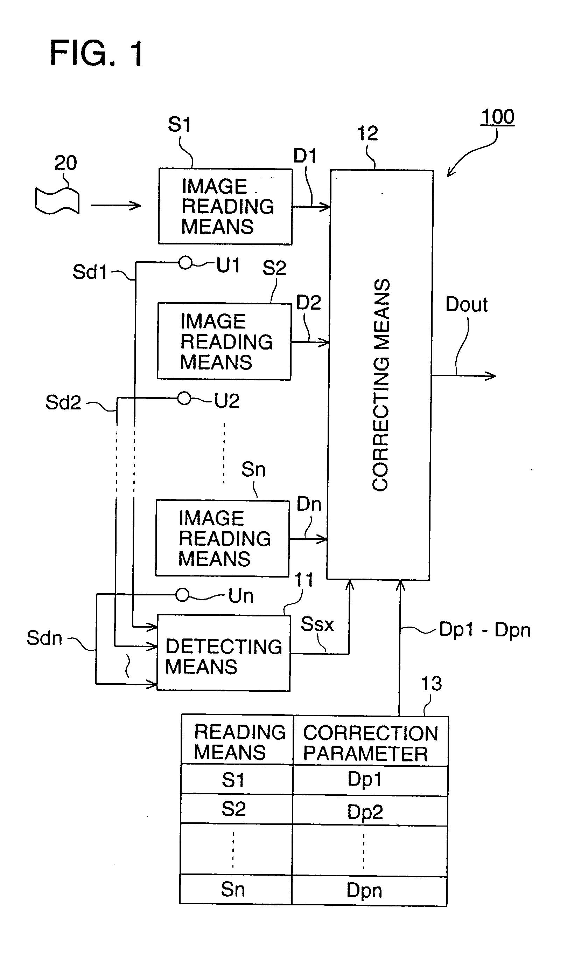

Fig. 1 is a block diagram showing a structural example of an original image reading apparatus as an example of the present invention.

In the present example, in the case where more than 2 image reading means are provided so that an arbitrary original reading means can be selected, when a specific image reading means is selected from these image reading means and an arbitrary image having unknown original density is read, the original reading information of the arbitrary image is corrected according to a correction parameter which is previously generated for the selected image reading means, so that, even when any image reading means is selected, an original image (information) having the uniform density can be obtained.

An original image reading apparatus 100 of the present example has n image reading means S1 - Sn as shown in Fig. 1, and a reading means for an original 20 can be selected. This is for the reason why, in the original 20, there is a thin document such as a sheet, and a thick document such as a book. A sensor U1 is provided in the image reading means S1, and, for example, when the original 20 is placed on the image reading apparatus S1, a reading detection signal Sd1 is generated. Similar sensors U2 - Un are provided in other image reading means S2 - Sn, and when the originals 20 are placed on these image reading apparatus S2 - Sn, reading detection signals Sd2 - Sdn are generated.

A detecting means 11 is connected to output stages of these sensors U1 - Un, and detects by using which image reading means Si (i = 1 - n) in these n-piece of image reading means S1 - Sn, the original 20 is read, thereby, the image reading means Si is specified. In the detecting means 11, a reading specification signal Ssx is generated.

A correcting means 12 is connected to an output stage of the detecting means 11, and an original reading information Di (i = 1 - n) by the specified image reading means Si is corrected according to the reading specification signal Ssx. For example, an EEPROM (an electrically-erasable programmable read-only memory from which electric information can be erased and into which the information can be written) 13 is connected to the correcting means 12, and correction parameters Dp1 - Dpn, which are previously obtained for each image reading means S1 - Sn, are stored in the EEPROM.

In this correcting means 12, the original reading information Di is corrected such that reading errors among image reading means S1 - Sn are eliminated according to correction parameters Dp1 - Dpn. As a correction method in this case, for example, the correction parameter Dpi is added to the original image information Di, thereby, the reading error is eliminated. The original image information Dout after the correction is outputted to a recording image processing section as the next stage, and the like.

In the present example, the correction parameter Dpi (i = 1 - n) is obtained as follows. Initially, the reference image, in which density of the original is previously known, is read by practically using the image reading means Si, thereby, the original image information Di by the image reading means Si is obtained. Then, the density of the reference image is obtained from the original image information Di by the image reading means Si, and the difference between the density of the reference image according to the original image information Di and the known density of the reference image, is calculated. Thereby, the correction parameter Dpi can be obtained for each image reading means Si.

Further, the calculation method of the correction parameter Dpi is not limited to the above cited method, but the following method may also be used. Initially, the reference image, in which the density of the original is previously known, is read by using each of n image reading means S1 - Sn, and each reference image information by these image reading means S1 - Sn is obtained. Then, when any one image reading means Sx in the image reading means S1 - Sn is defined as the reference image reading means, the differences among the density of the reference image obtained about the reference image information by the reference image reading means Sx and the density of the reference image obtained about the reference image information by other image reading means S1 - Sn (except Sx), are calculated. Thereby, the correction parameter Dpi for the image reading means Sx can be obtained for each of other image reading means S1 - Sn (except Sx).

As described above, according to the original image reading apparatus 100 of the present example, the original reading information Di is corrected such that reading errors among image reading means S1 - Sn are eliminated according to correction parameters Dp1 - Dpn which are previously obtained for each of image reading means S1 - Sn.

Accordingly, when a specific image reading means Si is selected from n image reading means S1 - Sn, and an arbitrary image having unknown original density is read thereby, the original reading information Di by the arbitrary image can be corrected according to the correction parameter Dpi which is previously generated for the selected image reading means Si.

By adopting such the correction method, for example, even if the reading error occurs due to the difference of the light transmissivity in the optical characteristic between 2 image reading means S1 and S2, the original image information Dout having the uniform density can be obtained from any of these image reading means S1 and S2, even when the original 20 having the same density is read by any of these image reading means S1 and S2.

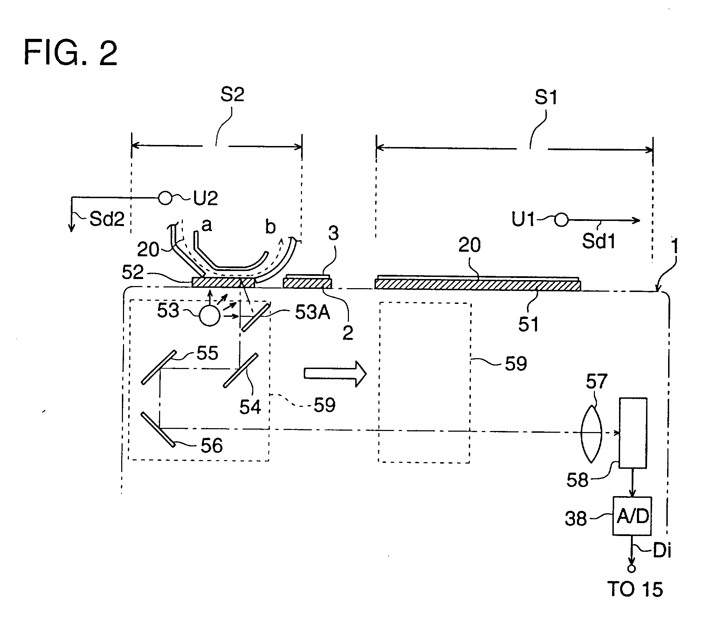

Succeedingly, the original image reading apparatus 100 when n = 2, will be described below. Fig. 2 is a view showing an example of the structure of an image sensing optical system of the original image reading apparatus 100.

In this example, the original image reading apparatus 100 is provided with the platen type original reading mechanism in which the image sensing system scans an arbitrary original having unknown density, and the automatic document feeding mechanism in which the original is conveyed for being scanned by the image sensing system. Further, the CCD image sensor is used for both of two mechanisms.

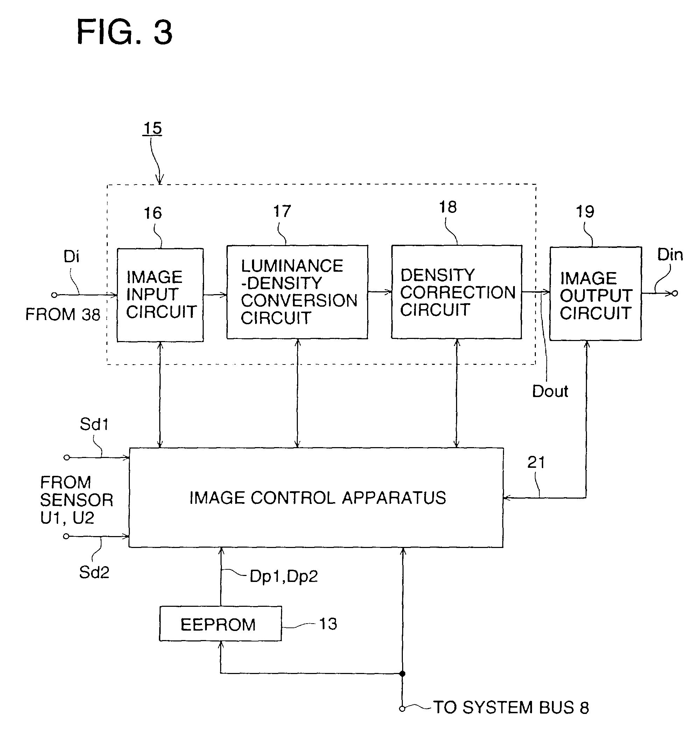

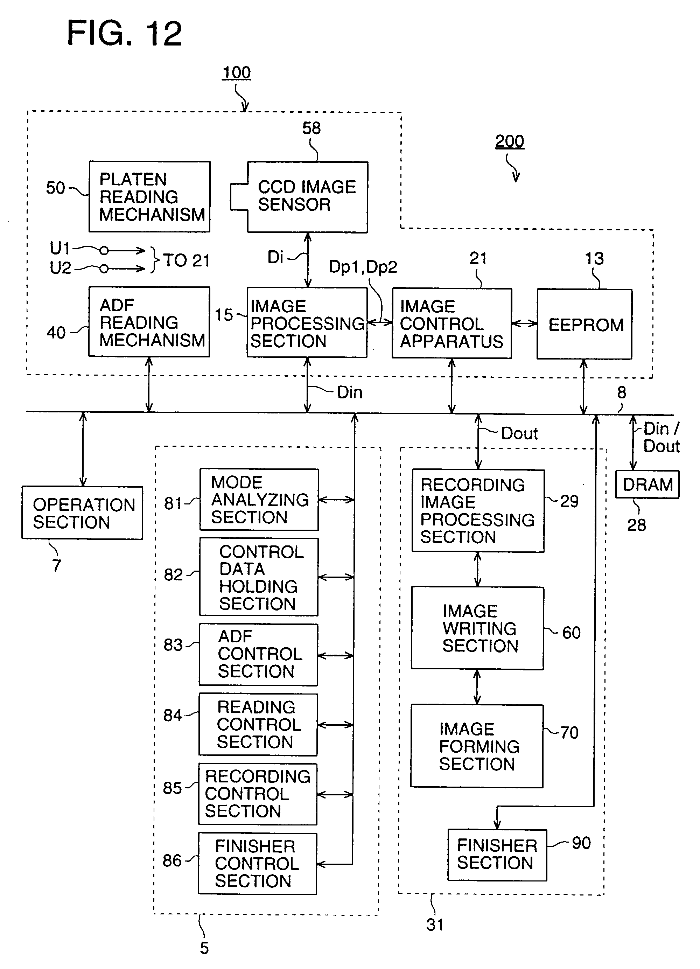

The original image reading apparatus 100 has a cabinet 1 shown by a two-dotted chain line in Fig. 2 (refer to Fig. 12). At least, a document platen glass 51 for the platen constituting the first image reading means (hereinafter, referred to as platen reading mechanism) S1 is provided on the cabinet 1, and an optical system 59 constituting the image sensing system scans the original placed on the document platen glass 51. A sensor U1 is provided on the platen reading mechanism S1, and for example, when the original 20 is placed on the document platen glass 51, a platen reading detection signal Sd1 is generated. The signal Sd1 is outputted to an image control apparatus 21 (refer to Fig. 3).

The optical system 59 is attached to a driving means, not shown, and scans from the left end portion to the right end portion in the cabinet 1. In the optical system 59, a lamp 53 is provided, and the light is irradiated onto the original 20. A mirror 53A is attached onto the lamp 53, and thereby, the light is deflected such that the horizontal light from the lamp 53 is incident on the original 20.

The returning light including the original image information from the original 20 is deflected in the scanning direction through mirrors 54, 55 and 56. An image focusing optical system 57 is attached to the right end portion in the cabinet 1, and the light from the mirror 56 is image-formed thereon. A CCD image sensor 58 is attached to the light emergence side of the image focusing optical system 57, and an original image is image-sensed by receiving the light from the image focusing optical system 57. The original image signal by the CCD image sensor 58 is converted into a digital signal by, for example, an analog/digital converter (hereinafter, referred to as A/D converter), then, the original image information Di is made thereby, and outputted to an image processing section 15 having the above cited correcting means 12 (refer to Fig. 3).

In the present example, a document platen glass 52 for the automatic document feeder (ADF: Auto Document Feeder) constituting the second image reading means (hereinafter, referred to as ADF reading mechanism) S2 is provided, and the original 20 is conveyed for being scanned by the above cited optical system 59. A sensor U2 is provided on the ADF reading mechanism S2, and for example, when the original 20 is set at an original inlet, not shown, an ADF reading detection signal Sd2 is generated. This signal Sd2 is outputted to an image control apparatus 21 (refer to Fig. 3). When the ADF reading mechanism S2 is used, the optical system 59 is stopped on the lower side of the document platen glass 52, and the original 20 is raster-scanned such that the original 20 is moved from the point "a" to the point "b" of the document platen glass 52 shown in Fig. 2.

When the light is irradiated from the lamp 53 of the optical system 59 onto the original 20, the horizontal light is deflected so that it enters the original 20. Then, the returning light including the original image information from the original 20 enters the image focusing optical system 57 through mirrors 54, 55 and 56. The light image-focused by the image focusing optical system 57 is image-sensed by the CCD image sensor 58. According to that, in the same manner as in the platen type mechanism, the original image information Di by the CCD image sensor 58 is outputted to the image processing section.

Glass 2 for correction, shown in Fig. 2, is provided between the platen reading mechanism S1 and the ADF reading mechanism S2, and a reference density plate 3 for so-called "zero" adjustment of the optical system 59 is formed on the glass 2.

Further, the image processing section 15 shown in Fig. 3 is connected to output stages of the platen reading mechanism S1 and the ADF reading mechanism S2, and an image control apparatus 21 including a detecting means 11 is connected to output stages of the sensors U1 and U2. In the image control apparatus 21, it is detected according to the output of sensors U1 and U2, which one of the platen reading mechanism S1 and the ADF reading mechanism S2 is used for reading the original 20.

The image processing section 15 has an image input circuit 16, a luminance-density conversion circuit 17, and a density correction circuit 18 which is an example of the correcting means 12.

The image input circuit 16 is connected to the output stage of an A/D converter 38 of the above cited CCD image sensor 58, and shading correction is conducted so that output fluctuation of each cell of the CCD image sensor 58 is corrected, and the reference of the reading density is adjusted. In the shading correction, the density reference value (the reference density plate 3 whose normal density is uniform) is read, and density correction is conducted according to the read value.

The luminance-density conversion circuit 17 is connected to the output stage of the image input circuit 16, and the luminance information of the shading-corrected original image information Di is converted into the density information. The density correction circuit 18 is connected to the output stage of the luminance-density conversion circuit 17, and the original image information Di converted into the density information is density-corrected by the image control apparatus 21. For example, the original reading information D1 and D2 is corrected according to outputs of the sensors U1 and U2 in such a manner that the reading error between the platen reading mechanism sl and the ADF reading mechanism S2 is eliminated.

The EEPROM 13 is connected to the image control apparatus 21, and correction parameters Dp1 and Dp2, which are previously obtained for each of the platen reading mechanism S1 and the ADF reading mechanism S2, are stored therein. The image control apparatus 21 and the EEPROM 13 are connected to a system bus 8 in order to be controlled by the higher-rank control system (microcomputer or the like).

In the image control apparatus 21, when the platen reading detection signal Sd1 is inputted from the sensor U1, it is specified that the original reading is conducted by using the platen reading mechanism S1. According to the signal Sd1, in the image control apparatus 21, the correction parameter Dp1 for the platen reading mechanism S1 is read from the EEPROM 13, and outputted to the density correction circuit 18. In the density correction circuit 18, the original reading information D1 is corrected according to the correction parameter Dp1.

Further, when the ADF reading detection signal Sd2 is outputted from the sensor U2 to the image control apparatus 21, it is specified that the original reading is conducted by using the ADF reading mechanism S2. According to the signal Sd2, in the image control apparatus 21, the correction parameter Dp2 for the ADF reading mechanism S2 is read from the EEPROM 13, and outputted to the density correction circuit 18.

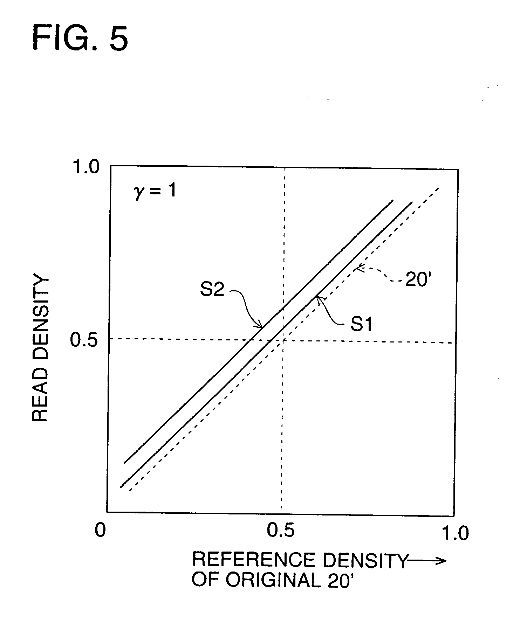

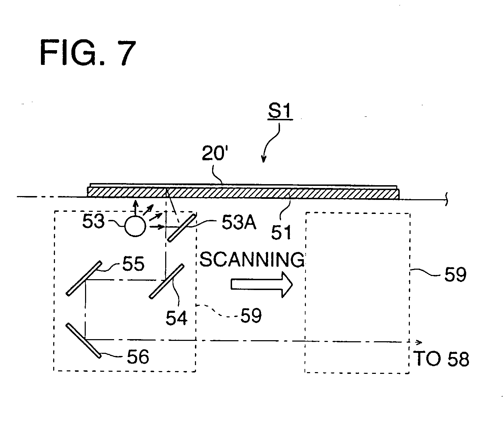

In the density correction circuit 18, the original reading information D2 is corrected according to the correction parameter Dp2. The original image information D1 and D2, whose density is corrected, is outputted to an image output section 19 as the original image information Dout. In this connection, a method for obtaining the correction parameters Dp1 - Dp2 will be described in Figs. 5 - 11.

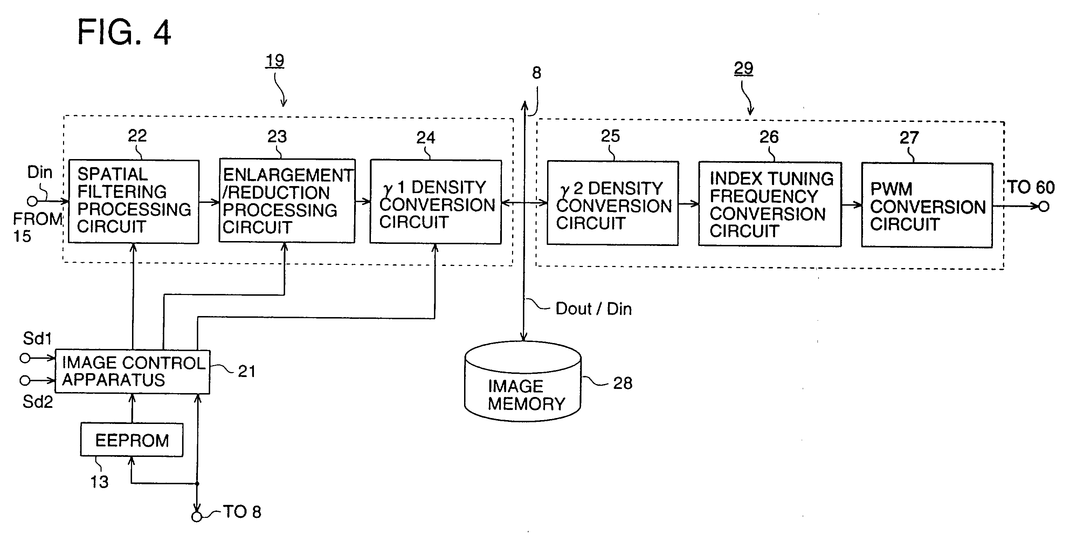

The image output section 19 is connected to the output stage of the density correction circuit 18. In the image output section 19, a spatial filtering processing circuit 22 as shown in Fig. 4 is provided, and spatial filtering processing to emphasize the image, or remove noise components is conducted according to the original image information Dout. An enlargement/reduction processing circuit 23 is connected to the output stage of the spatial filtering circuit 22, and the original image is enlargement/reduction processed according to the designation of the operator. A γ1 density conversion circuit 24 is connected to the output stage of the enlargement/reduction processing circuit 23, and the density adjustment of the original image information Dout is conducted, for example, such that the surface of the background of the original is not outputted, or the like.

The original image information Dout by the image output section 19 is stored once in an image memory 28 or the like, through a system bus 8. This is for the reason why there is a case in which the same original image is copied for a plurality of sheets. In the case of the plural sheets copying, the original image information Dout/Din with the same content (which is γ1 density-converted) is read from the image memory 28.

A recording image processing section 29 is connected to the data bus 8. A γ2 density conversion circuit 25 is connected to the recording image processing section 29, and the original image information Dout is converted into a value in which the output characteristic of the laser is considered, that is, a value showing the pulse-width of the laser in which the outputted image has a desired density. An index tuning frequency conversion circuit 26 is connected to the output stage of the γ2 density conversion circuit 25, and the original image information Dout which is converted into the γ2 density, is frequency-converted to drive the laser. A PWM conversion circuit 27 is connected to the output stage of the index tuning frequency conversion circuit 26, and a pulse-width of a laser driving pulse signal to control the laser light irradiation interval is modulated. The output of the PWM conversion circuit 27 is outputted to an image writing section 60 by the laser or the like.

Succeedingly, referring to Figs. 5 - 11, a generating method of the correction parameters will be described.

Fig. 5 is a characteristic view showing an example of the reading density before the density correction at the time of platen reading and the ADF reading, to the original having the reference density. In this example, with respect to the reference density of the original (a value in which the density of the original image is measured by an existing densitometer, or the like), a case is shown in which the density is shifted to the generally (in the whole density range) higher (dark) direction, in either case of the platen reading or the ADF reading.

Such the density shifting occurs due to the shift of the light transmissivity of the document platen glass 51 and 52, or the attached position (height) of them. Such kind of shifting causes fluctuation of the amount of light of the CCD image sensor 58. The reading density shifting due to the light amount fluctuation is shifted to the direction in which the density is generally (in whole density range) higher. Accordingly, the overall correction of the shift can be conducted by adjusting the shift by a specific density (correction parameter) in the manner as shown below.

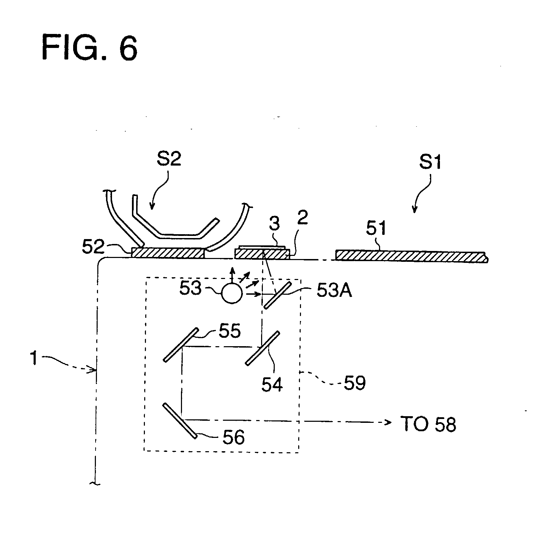

In this example, when correction parameters Dp1 and Dp2 are obtained, initially, the optical system 59 is moved under the glass 2 for correction shown in Fig. 6, and then, the reference density plate 3 is read and so-called "zero" adjustment of the optical system 59 is conducted.

After that, for example, when the correction parameter Dp1 for the platen reading mechanism S1 is obtained, after the reference original 20' including the reference image whose density is previously known, is placed on the platen 51, the reference image of the reference original 20' is read by practically using the platen reading mechanism S1, and the original image information by the platen reading mechanism S1 is obtained. As for the reference original 20' having the reference image, the original having the uniform density, whose density is measured by the existing densitometer, is prepared. The original image information is read a plurality of times for preparing a histogram.

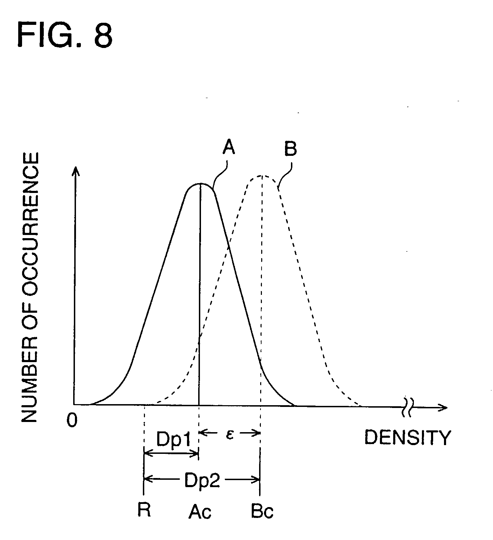

After that, the density of the reference image is obtained from the original image information by the platen reading mechanism S1, and a histogram "A" shown by a solid line in Fig. 8 is prepared. The ordinate shows the number of occurrence of the reference image by the original image information, and the abscissa shows the density thereof. The difference between the density of the reference image according to the original image information and that of the known reference image is calculated. As to the histogram, a luminance histogram may also be allowable.

Then, a representative value (for example, the density whose number of occurrence becomes a peak) of the histogram "A" is obtained. When the known density of the reference original 20' is R, and the representative density at the time of platen reading is Ac, the correction parameter (platen correction amount) Dp1 is expressed by (Ac - R). According to the platen correction amount (Ac - R), the correction parameter Dp1 about the platen reading mechanism S1 can be generated.

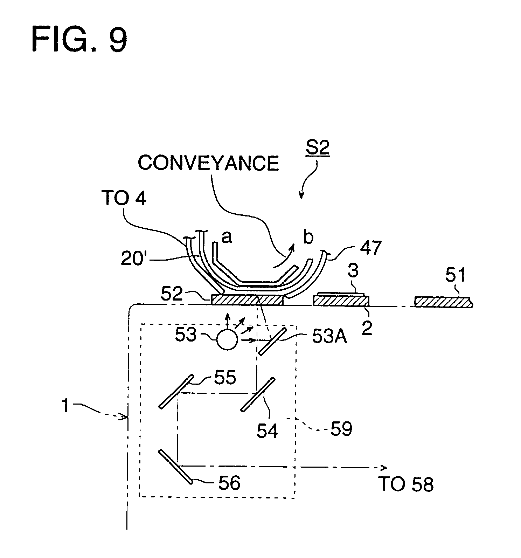

In the same manner, when the correction parameter Dp2 for the ADF reading mechanism S2 is obtained, after the reference original 20' including the reference image whose density is previously known, is placed at the original inlet 4 shown in Fig. 14, the reference image of the reference original 20' is read by practically using the ADF reading mechanism S2 shown in Fig. 9, thereby, the original image information by the ADF reading mechanism S2 is obtained. The original image information is read a plurality of times. The reference original 20' is conveyed from the point "a" to the point "b" on the document platen glass 52 by being guided by the guide member 47.

Then, the density of the reference image is obtained from the original image information by the ADF reading mechanism S2, and a histogram "B" shown by a dashed line in Fig. 8 is prepared. Herein, when the representative density at the time of the ADF reading is Bc, the correction parameter (ADF correction amount) Dp2 is (Bc - R). According to the ADF correction amount (Bc - R), the correction parameter Dp2 about the ADF reading mechanism S2 can be generated.

The difference between this density and the known reference density of the reference original 20' is obtained, and correction parameters Dp1 and Dp2, which are values to correct the difference, are stored in a nonvolatile memory such as the EEPROM 13, or the like. The correction parameters Dp1 and Dp2 may be inputted into the density correction circuit 18 for density correction, or may be reflected in the output value of the luminance-density conversion circuit (the circuit in which the luminance information is converted into the density information) 17 of the front stage. That is, at the time of the luminance-density conversion, the output density may be adjusted to eliminate the density difference.

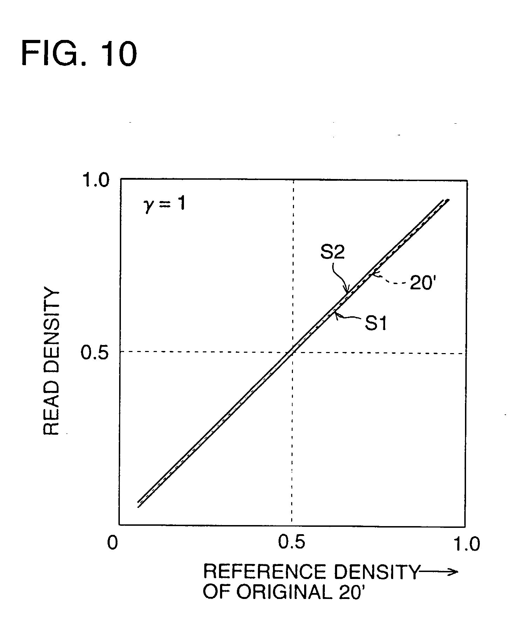

An example of the density at the platen reading and the ADF reading with respect to the original having the reference density, after the density has been corrected by this method, is shown in Fig. 10. According to the example of characteristics, it can be confirmed that the reading characteristic is linear and fine with respect to the reference density of the reference original 20' in both cases of the platen reading and the ADF reading.

In this connection, it is not necessary that the density at the platen reading mechanism S1 and the ADF reading mechanism S2 is adjusted by the same original, but aim values for these mechanisms are set separately, and the density may be adjusted by respectively separated correction parameters.

Further, when it is not necessary that the difference of the absolute density is obtained as the difference of density of the original image information, but when only the difference between reading mechanisms is obtained, the correction parameter may be calculated from the difference of the representative density between reading mechanisms, thereby only the output density of either one reading apparatus may be corrected.

For example, the reference image, in which the density of the original is previously known, is read by using each of the platen reading mechanism S1 and the ADF reading mechanism S2, and respective reference image information by each of the platen reading mechanism S1 and the ADF reading mechanism S2 are obtained. Then, when the platen reading mechanism S1 is defined as the reference, the difference ε between the density of the reference image obtained about the reference image information by the platen reading mechanism S1, which is the reference, and the density of the reference image obtained about the reference image information by the ADF reading mechanism S2, is calculated. By using the difference ε, the correction parameter Dp2 with respect to the ADF reading mechanism S2 may be generated as ε.

Further, because the difference of optical light transmission amounts can be obtained from the light transmissivity of the document platen glass 51 and 52, and the thickness of the document platen glass 51 and 52, the correction parameter Dpi may be obtained from these information of the optical system. In this case, the relational expression of the optical characteristic values (light transmissivity, thickness, etc.) of the document platen glass 51 and 52, and the correction value of the reading density, is previously obtained, these optical characteristic values are inputted into the reading apparatus 100, and the correction parameter Dpi may be calculated by the image control apparatus 21 or a microcomputer 5, which will be described later. Alternatively, the correction parameter Dpi is obtained from the optical characteristics of the document platen glass 51 and 52 by using the outside personal computer, or the like, and the correction parameter Dpi may be directly inputted into the density correction circuit 18.

Accordingly, when the optical characteristic values such as the light transmissivity and the like, are previously known about the document platen glass 51 for the platen and the document platen glass 52 for the ADF, the correction parameter Dp1 of the platen reading mechanism S1 and the correction parameter Dp2 of the ADF reading mechanism S2 may be prepared as follows. When either one of the reading mechanism S1 or S2 is defined as the reference, the difference between the optical characteristic value (light transmissivity) of the document platen glass 51 of the reference reading mechanism, and the optical characteristic value (light transmissivity including the conductive coat) of the other reading mechanism, is obtained. Thereby, even when something like a conductive coat is formed on the document platen glass 52, the correction parameter Dp2 corresponding to the light transmissivity can be generated.

As described above, according to the original image reading apparatus 100 and the correction method of the original image information of the present example, the original reading information D1 and D2 are corrected in such a manner that the reading error between both of reading mechanism S1 and S2 is eliminated according to the correction parameters Dp1 and Dp2 which are previously obtained for each of the platen reading mechanism S1 and the ADF reading mechanism S2.

Accordingly, when either one of the platen reading mechanism S1 or the ADF reading mechanism S2 is selected and an arbitrary image, in which the density of the original 20 is unknown, is read thereby, the original reading information by the arbitrary image can be corrected according to the correction parameter Dp1 or Dp2, which is previously prepared for the selected reading mechanism S1 or S2.

According to that, in the case where the reading error due to the difference of the light transmissivity of the document platen glass 51 and 52 occurs between the platen reading mechanism S1 and the ADF reading mechanism S2, when the document with the same density is read by both of the platen reading mechanism S1 and the ADF reading mechanism S2, the original image information with the uniform density can be obtained from each of the platen reading mechanism S1 and the ADF reading mechanism S2. Further, the gradation property of a color image may be corrected by the same method.

In the present example, the case in which the density of the original image information is corrected according to the correction parameter, is described. However, the present invention is not limited to this, but the MTF (Modulation Transfer Function) of the sharpness of the original image may be corrected.

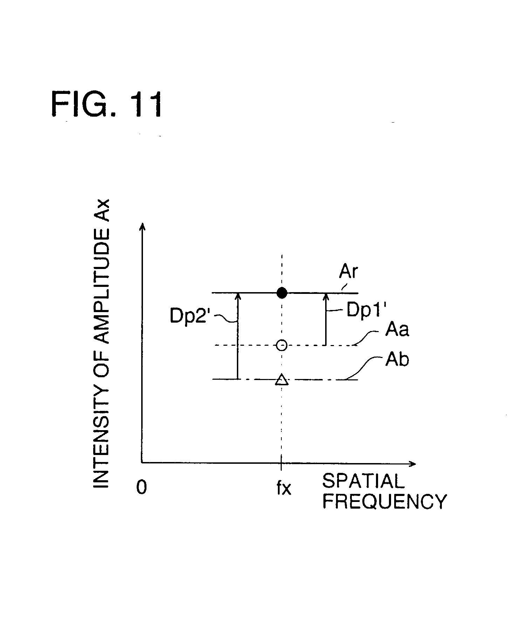

Fig. 11 is an FFT characteristic view of the specific frequency image showing an example for obtaining the correction parameter for the MTF correction.

In Fig. 11, the abscissa shows the spatial frequency depending on the sharpness (fineness) of the original image, and the ordinate shows the intensity of the amplitude Ax. A symbol fx is the spatial frequency of the reference original image whose MTF is previously known. That is, as the reference original 20', an original, which has waveforms of a specific frequency (fx), not shown, or equal interval line images, is used. As the waveform or frequency of the image in this case, a plurality of waveforms or frequencies of the image may be allowable.

Herein, when the intensity of the amplitude of the reference original image is Ar, and the intensity of the amplitude at the time of platen reading is Aa, the correction parameter (platen correction amount) Dp1' for the MTF is (Aa - Ar). The correction parameter Dp1' of the MTF about the platen reading mechanism S1 can be generated from the platen correction amount (Aa -Ar).

Further, when the intensity of the amplitude at the time of ADF reading is Ab, the correction parameter (ADF correction amount) Dp2' for the MTF is (Ab - Ar). The correction parameter Dp2' of the MTF about the ADF reading mechanism S2 can be generated from the ADF correction amount (Ab -Ar). Each of the intensity of the amplitude Ar, Aa, and Ab, can be obtained by Fourier transformation of the original image information.

When spatial filter coefficients are corrected in the image control apparatus 21 by using each of the above cited correction parameters Dp1' and Dp2' for the MTF, and are reflected in the spatial filtering processing circuit 22 (the spatial frequency of the original image information is adjusted), the original image information having fine sharpness can be obtained from each of the platen reading mechanism S1 and the ADF reading mechanism S2.

In this connection, normally, the MTF of the image reading apparatus is different depending on the reading direction (primary scanning direction, subsidiary scanning direction), therefore, the correction parameter is obtained for each scanning direction, that is, correction parameters for the primary scanning direction Dp1(m)', Dp2(m)', and correction parameters for the subsidiary scanning Dp1(s)',Dp2(S)' are obtained, and thereby, the MTF may be corrected for each scanning direction.

When these structures are applied to the image forming apparatus such as a digital copier, or the similar apparatus, the reading error (density difference of the original image, the difference of the MTF) between the platen reading mechanism S1 and the ADF reading mechanism S2, can be eliminated, therefore, even when either one of the reading mechanism S1 or S2 is selected and an arbitrary image whose density is unknown is read, the original image having the uniform density can be reproduced. Further, loads of the image processing of the image output section 19 and the subsequent, can be lightened. Thereby, a highly reliable and highly stable image forming apparatus provided with the original image reading apparatus 100 of the present invention, can be provided.

### EXAMPLE

Fig. 12 is a block diagram showing an example of the overall structure of a digital copier 200 to which the original image reading apparatus 100 of the present example is applied. In this example, a copier 200, in which obverse and reverse (double-sided) images of the original can be copied on the obverse and reverse sides of the transfer sheet 30 by the ADF reading mechanism, will be described below.

The copier 200 has a data bus 8 shown in Fig. 12, and thereby, the original image information Din/Dout is transferred. An operation section 7 is connected to the data bus 8, and can select or designate the number of copy sheets, enlargement/reduction rate and copy sheets (a3, A4, A4R, B4, B5, B5R).

The original image reading apparatus 100 used in the example, is provided with the EEPROM 13, image processing section 15, image control apparatus 21, ADF reading mechanism (automatic document feeding apparatus) 40, platen reading mechanism 50, CCD image sensor 58, and sensors U1 and U2, as shown in Fig. 3. The function of each component is the same as described in Fig. 3. This automatic document feeding apparatus 40 is electrically connected to the data bus 8, and the automatic document feeding is conducted in such a manner that images on both surfaces of the original can be read by the designation of the operation section 7.

The image processing section 15 which is connected to the A/D converter 38 of the CCD image sensor 58, is connected to the data bus 8. An image of the original 20, not shown, is read by the CCD image sensor 58, and the original image information Di after the obtained signal of the original has been A/D converted, is outputted to the image processing section 15. In the image processing section 15, when the shading correction by which the gradation of the original image information Di is divided stepwise from a white range toward a black range (luminance information), is conducted, the luminance information of the shading-corrected original image information Di is converted into the density information.

After that, the original image information Di, which is converted into the density information, is density-corrected. For example, the original reading information Di is corrected in such a manner that the reading error between the platen reading mechanism 50 and the ADF reading mechanism 40 is eliminated according to the output of the above cited sensors U1 and U2. The density correction in this case is the same as described in Fig. 3.

Further, after the original image information Di, which is density-corrected, is spatial filtering processed, enlargement/reduction processing is conducted at need. After that, the original image information is converted into γ1 density so that the original image information Di through the above processing, is written by a laser, for example, based on the density. The original image information Din after being converted into the γ1 density, is stored once in the image memory 28 or the like, through the system bus 8.

An image reproduction section 31 having a recording image processing section 29, image writing section 60, image forming section 70 and finisher section 90, is connected to the data bus 8. In the recording image processing section 29, the original image information Dout whose density is converted into γ1 density, is converted into the γ2 density. Then, the original image information Dout, which is converted into the γ2 density, is converted into the index tuning frequency for laser driving. The original image information after the frequency conversion is PWM-modulated, and then, outputted to the image writing section 60.

The image writing section 60 having the optical driving system is connected to the output stage of the recording image processing section 29, and an electrostatic latent image of the original is formed on the photoreceptor drum by the optical driving system. Further, the image forming section 70 is provided below the image writing section 60, and a toner image is fixed after the electrostatic latent image on the photoreceptor drum is developed and transferred onto the transfer sheet. The image forming section 70 will be detailed in Fig. 11.

Further, the microcomputer 5 is connected to the above cited data bus 8, and thereby, the input and output of the operation section 7, DRAM 28, image reproduction means 31, and original image reading apparatus 100, are subjected to the central control. For example, the microcomputer 5 has a mode analyzing section 81, control data holding section 82, ADF reading control section 83, platen reading control section 84, recording control section 85 and finisher control section 86, and these mode analyzing section 81, control data holding section 82 and other control sections 83 - 86 are respectively connected to the data bus 8.

In the mode analyzing section 81, an operation mode, which is analyzed from a selection from the operation section 7 or a designated operation, is determined. In the control data holding section 82, the control data which is necessary for the reading control of the image according to the operation mode and for its recording control, is held. In the ADF reading control section 86, the input/output of the automatic document feeding apparatus 40 is controlled according to the operation mode, and in the platen reading control section 84, the input/output of the CCD image sensor 58 is controlled according to the result of analysis in the mode analyzing section 81. In the recording control section 85, the input/output of the recording image processing section 29 is controlled according to the result of analysis in the mode analyzing section 81, and in the finisher control section 86, the input/output of the finisher section 90 is controlled according to the result of analysis in the mode analyzing section 81.

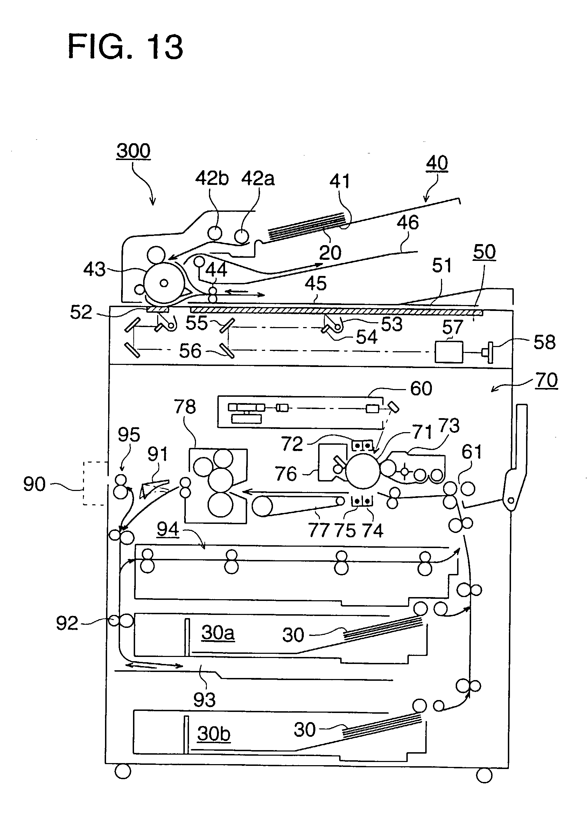

Fig. 13 is a sectional view showing an example of the structure of the copier 200. The above cited automatic document feeding apparatus 40 has an original placement section 41, roller 42a, roller 42b, roller 43, reversing roller 44, reversing section 45, delivery sheet tray 46 and document platen glass 52 for the ADF, as shown in Fig. 13.

Further, the platen reading mechanism 50 has, in addition to the document platen glass 51 for the platen, a lamp (light source) 53 for both of the ADF reading mechanism 40 and the optical system 59, mirrors 54, 55, 56, image focusing optical system 57, CCD image sensor 58, and optical driving system, not shown. The image forming section 70 has a photoreceptor drum 71, charging section 72, developing section 73, transfer section 74, separation section 75, cleaning section 76, conveying mechanism 77, and fixing section 78.

For example, in the case of the operation mode in which the original 20 is read by the ADF reading mechanism 40, a plurality of sheets of original 20 are placed on the original placement section 41 in the condition that the surface of the first page of the original 20 faces upward. In this case, an ADF reading detection signal Sd2 is generated from the sensor U2. When the roller 42a and the roller 42b are driven by the control of the ADF control section 83, the first sheet of the original 20 fed through these rollers 42a and 42b is conveyed through roller 43.

At that time, the light is irradiated onto the image surface of the original 20 from the lamp 53 of the optical system 59 by a control command from the reading control section 84. This reflected light is guided by the mirrors 54, 55, and 56, and enters into the CCD image sensor 58 through the image focusing optical system 57. Thereby, an image of the original 20 is formed on the light receiving surface of the CCD image sensor 58.

Further, in the case of the operation mode in which the original 20 is read by the platen reading mechanism 50, the original 20 is placed on the original placement section 41 in the condition that, on the platen glass 51, the reading surface of the original 20 faces downward. At that time, a platen reading detection signal Sd1 is generated from the sensor U1. In this operation mode, by moving the optical system 49 along the platen glass 51 for scanning, the original image is read by the CCD image sensor 58.

Then, after the image obtaining signal of the read original 20 is converted into a digital signal by an A/D converter 38 of the CCD image sensor 58, the original image information Di is formed, and transferred to the image processing section 15 shown in Fig. 10. In the image processing section 15, the original reading information D1 and D2 are corrected in such a manner that the reading error between the platen reading mechanism 50 and the ADF reading mechanism 40 is eliminated according to the correction parameters Dp1 and Dp2 which are previously obtained for each of the platen reading mechanism 50 and the ADF reading mechanism 40. The original image information after correction is temporarily stored in a DRAM 28 through the data bus 8.

Incidentally, in the case of an operation mode by the automatic document feeding apparatus 40, the original 20 is rotated around the roller 43. In the case of this operation mode, the original image is read by the CCD image sensor 58 under the condition that the lamp 53 and the mirror 54 are fixed below the document platen glass 52 for the ADF.

When the first page of the original 20 is read, then, a winding operation using the roller 43 is carried out again through the reversing roller 44, an image of the reverse surface of the original is read by the CCD image sensor 58, and its original image information Di is outputted to the image processing section 15.

In this manner, the original 20 whose obverse and reverse surface images are read, is reversed again by the reversing roller 44, and stacked on the delivery sheet tray 46 under the condition that the obverse surface of the original 20 faces downward. At the same time, the original image information Di which is read by the CCD image sensor 58, is image-processed in the image processing section 15, and then, stored in the DRAM 28.

On the other hand, a transfer sheet 30 is fed from a sheet feed cassette 30a or 30b in which transfer sheets 30 are stacked, to the image forming section 70. After the transfer sheet 30 is synchronized with the photoreceptor drum 71 by a register roller 61 provided at an inlet for the transfer sheet 30, the transfer sheet 30 further approaches the photoreceptor drum 71.

In this condition, after the original image information Dout read from the DRAM 28 is image-processed in the recording image processing section 29, the information Dout is outputted to the image writing section 60. The original image information Dout is read from the recording image processing section 29 in such a manner that the reverse surface of each original 20 is read at first. In the image writing section 60, the laser light beam corresponding to the original image information Dout, is irradiated from the laser diode onto the photoreceptor drum 71, thereby, an electrostatic latent image of the original 20 is formed on the photoreceptor drum 71. The electrostatic latent image is formed on the photoreceptor drum 71 as a toner image, after the electrostatic latent image has been developed by the developing section 73.

This toner image is transferred onto the transfer sheet 30 by the transfer section 74 provided below the photoreceptor drum 71. At this time, the transfer sheet 30 is attracted to the photoreceptor drum 71. Then, the transfer sheet 30 attracted to the photoreceptor drum 71 is separated from the photoreceptor drum 71 by the separation section 75. After that, the transfer sheet 30 separated from the photoreceptor drum 71 is sent to the fixing section 78 through a conveying mechanism 77, and the toner image is fixed by the heat and pressure. Thereby, the image of the reverse surface of the original (the second page image) is formed on the transfer sheet 30.

The transfer sheet 30 on which the toner image is fixed, is conveyed downward through a guide 91, and sent to a reversing section 93. Next, the transfer sheet 30 sent to the reversing section 93, is sent upward again by a reversing roller 92, and transferred again to the image forming section 70 after passing through a reverse conveying path 94 provided above the sheet feed cassette 30a.

In the image forming section 70, in which the image formation of the reverse surface of the original 20 has been completed as described above, remaining toner adhered onto the photoreceptor drum 71 is removed by a cleaning section 76, and the image forming section 70 is ready for the next image formation.

In this condition, the transfer sheet 30 is sent to the image forming section 70 through the register roller 61 with the obverse side (the surface on which an image is not formed) of the transfer sheet 30 facing upward. In the image forming section 70, an electrostatic latent image of the obverse side of the original is formed on the photoreceptor drum 71, and developed in the developing section 73, thereby, a toner image of the obverse side of the original is formed on the photoreceptor drum 71.

This toner image is transferred onto the transfer sheet 30 by the transfer section 74, and the toner image of the first page of the original 20 is formed on the obverse side of the transfer sheet 30. The transfer sheet 30 attracted to the photoreceptor drum 71 is separated from the photoreceptor drum 71 by the separation section 75, after that, the transfer sheet 30 is sent to the fixing section 78 through the conveying mechanism 77, and the toner image is fixed by the heat and pressure. Thereby, the image of the obverse side of the original (the first page image) can be formed on the transfer sheet 30.

After that, the transfer sheet 30 on both surfaces of which image formation has been completed, is delivered outside the apparatus without any additional operation, or reversed again by the reversing section 93 and delivered outside the apparatus by a delivery roller 95, corresponding to the output mode (designation of the operation for the sorter function, or the like) in the finisher section 90. Thereby, images on the obverse and reverse sides (double sides) of the original 20 can be copied on the obverse and reverse sides of the transfer sheet 30.

In the manner described above, according to the digital copier 200 to which the original image reading apparatus 100 is applied, the original reading information D1 and D2 are corrected in such a manner that the reading error between both of the platen reading mechanism 50 and the ADF reading mechanism 40 is eliminated according to the correction parameters Dp1 and Dp2 which are previously obtained for each of above two reading mechanisms 50 and 40.

Accordingly, even when either one of the platen reading mechanism 50 or the ADF reading mechanism 40 is used, the original image with the uniform density can be reproduced. Thereby, a highly reliable and stable digital copier 200 can be provided.

In this example, the case in which two image reading means are used and one CCD image sensor 58 or one optical system 59 is used for both of the platen reading mechanism 50 and the ADF reading mechanism 40, is described. However, the present invention is not limited to that case, but, of course, the present invention can be applied to the image reading apparatus in which the CCD image sensor 58 or the optical system 59 is independently provided for each of the image reading mechanisms.

Further, as the third image reading means, a mechanism to read a projection image by a composite projector such as an OHP (Over Head Projector) or a similar device, is considered. In also the case where the reading density of the projection image by the OHP is corrected, the correction method of the present invention can be applied, and the same effects can be obtained.

As described above, according to the original image recording apparatus of the present invention, the original reading information is corrected in such a manner that the reading error among more than two image reading means is eliminated according to the correction parameters which are previously obtained for each image reading means.

According to this structure, when a specific image reading means is selected from more than two image reading means, and an arbitrary image, in which the characteristic values such as the density of the original or the modulation transfer function, etc., are unknown, is read thereby, the original reading information by the arbitrary image can be corrected according to the correction parameter which is previously generated for the selected image reading means.

According to the original image reading apparatus of the present invention, the original reading information is corrected in such a manner that the reading error between the first and the second image reading means is eliminated according to the correction parameters which are obtained from the first image reading means in which the image sensing system is moved for scanning the original, and the second image reading means in which the original is moved for being scanned by the image sensing system.

According to this structure, when the original with the same density is read by both of the first and the second image reading means, even when the reading error due to the difference of the light transmissivity in the optical characteristic occurs between the first and the second image reading means, the original image information having uniform density and fine sharpness, can be obtained from both of the first and the second image reading means.

Accordingly, a highly reliable original reading apparatus provided with a platen type original reading mechanism and an automatic document feeding mechanism, can be provided.

According to the correction method of the original image information of the present invention, when a specific image reading means is selected from more than two image reading means, and an arbitrary image, in which the density of the original and its modulation transfer function are unknown, is read thereby, the original reading information by the arbitrary image is corrected according to the correction parameter which is previously generated for the selected image reading means.

According to this structure, because the reading error among the image reading means can be eliminated, even when any one of image reading means is selected and an arbitrary image in which the density of the original or its modulation transfer function is unknown, is read thereby, a uniform original image can be reproduced.

The present invention is extremely preferable when being applied to an original image reading apparatus provided with a platen type original reading mechanism and an automatic document feeding mechanism, or a similar apparatus.

## Claims

1. An original image reading apparatus comprising:
(a) a plurality of image reading means for reading an original;
(b) a memory for storing a correction parameter;
(c) correction parameter generating means for generating the correction parameter,
wherein the correction parameter generated by the correction parameter generating means is stored in the memory or replaced with a preset correction parameter which has been stored in the memory to update; and
(d) correcting means for correcting image information of the original read by a specific image reading means selected from the plurality of image reading means according to the correction parameter stored in the memory.

2. The original image reading apparatus of claim 1 further comprising:
detecting means for detecting which image reading means has been selected from the plurality of image reading means,
wherein the correcting means corrects the image information of the original read by the specific image reading means selected, according to the correction parameter corresponding to the image reading means detected by the detecting means.

3. The original image reading apparatus of claim 1, wherein at least one of the plurality of image reading means further comprises:
an original placing table for placing the original;
an image sensor; and
an optical system for introducing a light from the original to the image sensor,
wherein the optical system scans the original by moving against the original placing table.

4. The original image reading apparatus of claim 1, wherein at least one of the plurality of image reading means further comprises:
an image sensor;
an optical system for introducing a light from the original to the image sensor; and
original conveying means for conveying the original, wherein the original is scanned by being conveyed by the conveying means while the optical system is stopped.

5. The original image reading apparatus of claim 4, wherein the original is scanned by being conveyed on a replaceable original glass by the conveying means.

6. The original image reading apparatus of claim 1, wherein the plurality of image reading means have a common image sensor.

7. The original image reading apparatus of claim 6, the common image sensor is a charge coupled device (CCD).

8. The original image reading apparatus of claim 1, wherein the memory stores the correction parameter corresponding to each of the plurality of image reading means.

9. The original image reading apparatus of claim 1, wherein the correction parameter generating means generates the correction parameter corresponding to each of the plurality of image reading means on the basis of image information of a reference original read by each of the plurality of image reading means, and the memory stores the correction parameter therein.

10. The original image reading apparatus of claim 9, wherein the correction parameter is generated by calculating a difference between a predetermined density data of the reference original and density information contained in the image information of the reference original read by each of the plurality of image reading means.

11. The original image reading apparatus of claim 9, wherein the correction parameter is generated by calculating a difference between density information contained in the image information of the reference original read by the specific image reading means and density information contained in the image information of the reference original read by each of the plurality of image reading means other than the specific image reading means.

12. The original image reading apparatus of claim 9, wherein the correction parameter is generated by calculating a difference between predetermined MTF information of the reference original and MTF information contained in the image information of the reference original read by each of the plurality of image reading means.

13. The original image reading apparatus of claim 9, wherein the correction parameter is generated by calculating a difference between MTF information contained in the image information of the reference original read by the specific image reading means and MTF information contained in the image information of the reference original read by each of the plurality of image reading means other than the specific image reading means.
